# EUROPEAN PATENT SPECIFICATION

(11) **EP 0 558 764 B1**
(45) Date of publication and mention of the grant of the patent: **16.07.1997**
(21) Application number: 92920365.1
(22) Date of filing: 29.09.1992
(51) Int. Cl.: B60J 1/02, B29C 47/02, B60J 10/02, B29C 47/00

(54) **WINDOW MOLDING FOR AUTOMOBILES AND METHOD OF PRODUCING THE SAME**
RAHMENLEISTE FUR KRAFTFAHRZEUGE UND HERSTELLUNGSVERFAHREN DAFÜR
MOULURE DE FENETRE POUR AUTOMOBILES ET PROCEDE DE PRODUCTION

(30) Priority: 30.09.1991 JP 278583/91
(43) Date of publication of application: 08.09.1993
(73) Proprietor: TOKAI KOGYO KABUSHIKI KAISHA, Ohbu-shi, Aichi 474 (JP)
(72) Inventor: YADA, Yukihiko, 8-6, Aza-Komori Narumi-cho, Aichi 458 (JP)
(74) Representative: Brunner, Michael John
(86) International application number: JP9201248
(87) International publication number: WO9307015

(56) References cited:
- JP-A- 3 128 722
- JP-A- 3 143 730
- JP-A- 6 430 727
- JP-A-59 114 040

## Description

### Technical Field

This invention relates to a windshield molding for vehicles installed into the space between the periphery of the windshield glass mounted in the windshield frame opening of the body panels of a vehicle and the body panels proper, and to the production method thereof.

### Background Art

A windshield molding is generally installed along the periphery of the windshield glass mounted in the windshield frame opening of body panels. More precisely, a long belt-shaped space is formed between the periphery of the windshield glass and the edge of the windshield opening of the body panels, and a windshield molding of a long belt-shaped extruded material is inserted into said space for sealing. The windshield molding consists of a support leg, which is inserted in the above space and engaged with a specified portion, and a decorative portion, which is provided on the outside edge of said support leg to cover the above space from the outside.

Japanese Utility Model Publication (Kohkoku) Nos. 54416/1982 and 23699/1983 have proposed that such a windshield molding for vehicles should have grooves to dam up and drain rainwater from the windshield glass. In this case, the member on which a groove is formed and that on which there is no groove are molded separately and then the members are placed into a specified injection die to be integrated into one. With this method, however, a line is formed at their connection point due to die molding, presenting a decorative problem.

In order to eliminate such a problem, Japanese Patent Laid-Open Nos. 280019/1987 (Europe Patent Publication No. 0310262A), 283017/1987, 212121/1988, 8019/1988, 8020/1988, 8021/1988, 37914/1988, 195032/1989, (USP4865796, USP5074610), 291721/1988 (French Patent Publication No. 2620661, USP4757660), 202518/1989, 244820/1989, 269611/1989, 269612/1989, 269613/1989 (USP5104173), and Japanese Utility Model Laid-Open No. 128411/1989 have proposed that moldings should be continuously extruded throughout the entire length.

Japanese Patent Laid-Open Nos. 280019/1987 and 283017/1987 stipulate that after molding material containing a core is extruded with a constant cross-sectional shape, a dam lug is bent so as to project away from the glass at the side molding section to form a rainwater groove. In the molding described in Japanese Patent Laid-Open No. 212121/1988, the decorative portion of the molding material extruded continuously with a constant cross-sectional shape is raised by a injection molded part at the side molding section and a rainwater groove is formed on the raised portion. In the moldings described in Japanese Patent Laid-Open Nos. 8019/1988, 8020/1988, 8021/1988, and 37914/1988, the decorative portion of the molding material extruded continuously with a constant cross-sectional shape is plastic-deformed at the side molding section and a rainwater groove is formed on the deformed portion.

In the molding described in Japanese Patent Laid-Open No. 195032/1989, after molding material is extruded with a constant cross-sectional shape, the projection forming a dam is cut off at the region where it is unnecessary. Japanese Patent Laid-Open Nos. 291721/1988 and 244820/1989 stipulate that one of the continuous groove pairs with a constant cross-sectional shape is cut off at a specified region and molding replacement is performed so that a groove is formed at the side molding section. The windshield molding described in Japanese Utility Model Laid-Open No. 128411/1989 consists of the above molding and an injection molded part inserted into a corner of this molding.

In the molding described in Japanese Patent Laid-Open No. 269612/1989, a windshield glass insertion groove and a rainwater drain groove are molded by changing the cut-off shape of the molding material extruded continuously with a constant cross sectional shape. In the windshield moldings described in Japanese Patent Laid-Open Nos. 269611/1989 and 269613/1989, the positions where a windshield glass insertion groove and a rainwater drain groove are molded are adjusted by adhering the support lug forming a glass engagement groove while changing the position where the support lug is molded with respect to the decorative portion molded to a constant cross sectional shape.

In the molding described in Japanese Patent Laid-Open No. 202518/1989, a dam is formed by changing the cross-sectional shape of the drip portion.

Each of the conventional moldings described so far have problems such as the following.

In the moldings described in Japanese Patent Laid-Open Nos. 280019/1987 and 283017/1987, the decorative portion at the upper molding section where no groove is formed is made wider than necessary. This is contrary to the requirements for light weight and cost reduction. In addition, it is not preferable from the aspect of securing a good driving field of view.

In the moldings described in Japanese Patent Laid-Open Nos. 8019/1988, 8020/1988, 8021/1988, and 37914/1988, it is difficult to mold a groove of sufficient size. They also require more molding processes.

In the molding described in Japanese Patent Laid-Open No. 195032/1989, a sharp portion is formed on the decorative portion, requiring post processes such as rounding-off of the sharp portion. This also presents a decorative problem because the surface state after it is cut off, especially that of a glossy surface, is different from the other portion.

None of the other proposed means can continuously and easily mold a lightweight molding provided with a groove having a sufficient damming function, without waste.

The present invention intends to provide a vehicle windshield molding and production method thereof in which a rainwater drain groove having a sufficient damming function can be extruded by changing it continuously, wherein the portion where the rainwater drain groove is molded is given sufficient rigidity, and the portion without the rainwater drain groove is continuously molded in a narrow width in order to achieve light weight.

JP-A-3-143730 discloses a windshield moulding with a rain water groove in a decorative portion.

### Disclosure of the Invention

According to the present invention, there is provided a windshield moulding for a vehicle which is installed along the periphery of windshield glass mounted in a windshield frame opening of the body panels of the vehicle, the moulding comprising:
a support leg for insertion into the space between the periphery of said windshield glass and the inner edge of the windshield frame opening of the body panels; and
a decorative portion, provided on the outside edge of the support leg, to cover said space from the outside of the vehicle; wherein
the decorative portion has a thick section at the section corresponding to the side edge of the windshield glass, whereby the width of the decorative portion is gradually enlarged toward the inner periphery of the windshield glass and the outside in the direction perpendicular to the longitudinal direction of the moulding;
a rainwater groove is provided on the inner periphery wall of the enlarged thick section of the decorative portion so as to open to the inner periphery, the rainwater groove depth reducing to zero at a section corresponding to the upper edge of the windshield glass;
whereby the moulding is produced continuously and in one piece by extrusion moulding throughout its entire length, characterised in that:
both the width and the thickness of the decorative portion in the direction from the inside to the outside vary and are extended to a greater degree at the section corresponding to the side edge than at the section corresponding to the upper edge of the windshield glass; and
the section in which the depth of the rainwater groove reduces to zero has a variable width and thickness.

In the production method of the windshield moulding for vehicles of the present invention there is provided a method of manufacturing a windshield moulding for a vehicle by extrusion moulding using a die having an extrusion moulding opening for moulding a decorative portion which covers the space between the periphery of a vehicle windshield glass and the inner edge of a vehicle windshield frame opening in the body panels of a vehicle from the outside of the vehicle;
wherein extrusion moulding is performed using a first die having an extrusion moulding opening with the opening shape for forming the outer surface shape of said decorative portion, a second die installed so as to move diagonally relative to said first die so that the opening area of the extrusion moulding opening for the decorative portion may be changed by partly shielding the extrusion moulding opening of the first die for the decorative portion, and
a third die installed so as to move relative to said first die so that it may enter the extrusion moulding opening of said first die for the decorative portion from the side to partly shield the extrusion moulding opening and change the shielded area, the method comprising the steps of:
extruding the section corresponding to the side edge of the windshield glass, enlarging the decorative portion toward the outside and the inner periphery by diagonally moving said second die so that the opening area of the extrusion moulding opening of said first die for the decorative portion is increased; extruding the rainwater groove on the side wall of an enlarged thick section of the decorative portion, allowing said third die to enter the increased opening area region of the extrusion opening for said decorative portion at a specified timing;
extruding the section corresponding to the upper edge of the windshield glass and the section joining the upper and side sections by reducing the width of the decorative portion to a volume narrower than the section corresponding to the side edge of said windshield glass by further diagonally moving said second die so that the opening area of the extrusion opening of said first die for the decorative portion is reduced toward the inside and the outer periphery to provide thereby a decorative portion of varying width and thickness;
wherein the moulding is extruded continuously and in one piece from the extrusion opening of the die.

According to the present invention, the moulding is extruded while continuously changing the width and the thickness of the decorative portion at the upper and the side moulding sections to continuously produce the moulding throughout the entire length without adding cutting or other processes, and during the continuous extrusion moulding, a rainwater groove is provided on the inner periphery wall of the enlarged thick section of the decorative portion, as described above. Therefore, a rainwater groove with a large opening may be formed with high rigidity. Furthermore, the decorative portion at the upper moulding section where no rainwater groove is formed is made thin to achieve light weight and reduced cost of the moulding. This also ensures a good driving field of view, thereby improving safety.

### Brief Description of the Drawings

Fig. 1 is an explanatory perspective view showing an automobile front containing the windshield molding produced according to the present invention.

Fig. 2 is an explanatory perspective view showing the structure of the vicinity of a corner of the windshield molding in the first embodiment of the present invention.

Fig. 3 is a cross-sectional view taken along the line III - III shown in Fig. 1.

Fig. 4 is a cross-sectional view taken along the line IV - IV in Fig. 3.

Fig. 5 is a cross-sectional view taken along the line V - V in Fig. 3.

Fig. 6 is a cross-sectional view taken along the line VI - VI in Fig. 3.

Fig. 7 is an explanatory front view showing an example of the extruder for the windshield moldings in Figs. 1 to 6.

Fig. 8 is an explanatory front view showing the extruder of Fig. 7 in a moved state.

Fig. 9 is an explanatory front view showing the extruder of Fig. 7 in a further moved state.

Fig. 10 is an explanatory front view showing the extruder of Fig. 7 in an even further moved state.

Fig. 11 shows the structure of the windshield molding in another embodiment of the present invention and is a cross-sectional view similar to Fig. 3.

Fig. 12 is a cross-sectional view taken along the line XII to XII shown in Fig. 11.

Fig. 13 is a cross-sectional view taken along the line XIII to XIII in Fig. 11.

Fig. 14 is an explanatory front view showing an example of the extruder for the windshield moldings in Figs. 11 to 13.

Fig. 15 is an explanatory front view showing the extruder of Fig. 14 in a moved state.

### Best Mode for Carrying Out the Invention

The following describes embodiments of the present invention according to the drawings.

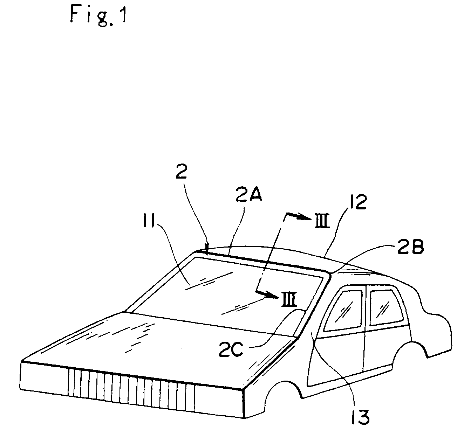

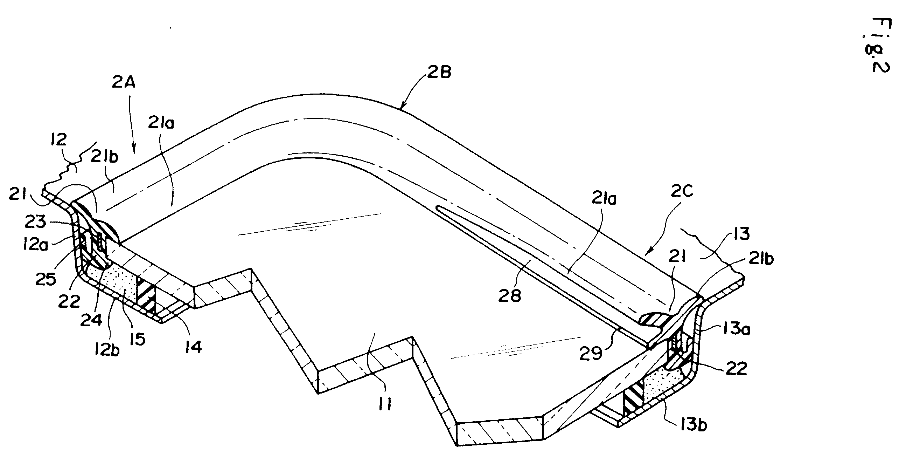

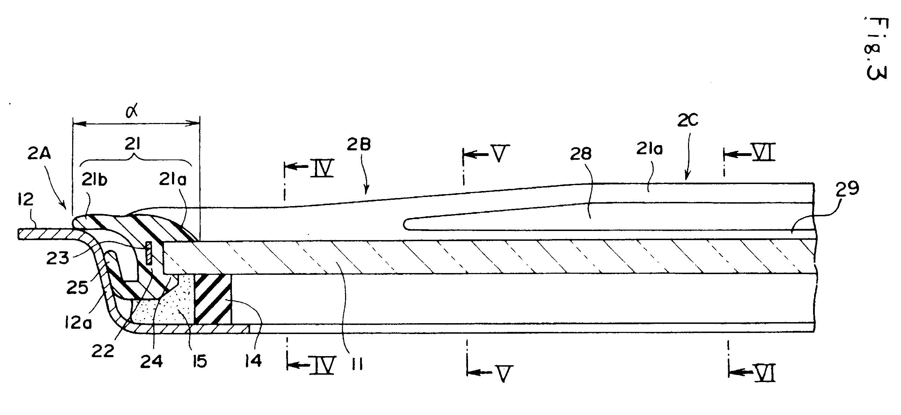

As Fig. 1 shows, a windshield molding 2 composed of long belt-shaped extruded sealing members is installed along the periphery of the windshield glass 11 of an automobile. This windshield molding 2 is composed of the upper molding section 2A which is installed in the space between the upper edge of the above-mentioned windshield glass 11 and the roof panel 12, the side molding sections 2C which are installed in the space between both side edges of the windshield glass 11 and the pillar panels 13, and the curved corner molding sections 2B connecting the upper molding section 2A and the side molding sections 2C. These moldings, 2A, 2B, and 2C, are formed continuously as a single molding by extrusion as described later herein.

The windshield molding 2 in embodiment No. 1 shown in Figs. 2 to 6 is made of elastic material such as rubber and synthetic resin, etc., into a long belt-shaped solid molding with the extruder described later herein, is provided with the support leg 22 which is inserted in the spaces between the periphery of the windshield glass 11 and both the roof panel 12 and the front pillars 13 and is provided with the decorative portion 21 which covers the spaces between the windshield glass 11 and both the outside surface of the roof panel 12 and the front pillars 13 from the outside (the upper side of Fig. 3). The decorative portion 21 is integrally formed on the outside edge of the support leg 22. The cross-sectional shape perpendicular to the longitudinal direction, consisting of the decorative portion 21 and the support leg 22 is an approximate T shape.

A thin metal plate core 23 is buried in the upper outside edge of the support leg 22 throughout the entire length where the support leg 22 is connected to the decorative portion 21. A support portion 24 which projects toward the lower side of the windshield glass 11 is provided on the inner periphery of the inside edge (lower end in drawings) of the support leg 22. A flexible elastic lip 25 which projects toward the body panels 12 and 13 is provided on the outer periphery of the inside edge (lower end in drawings) of the support leg 22 throughout the entire length.

On the other hand, the decorative portion is provided with a glass side decorative portion 21a and a panel side decorative portion 21b, which extend from the outside edge (upper end in drawings) of the support leg 22, to the inner and the outer peripheries, respectively. The glass side decorative portion 21a is a lip-shaped member which covers the outer surface of the windshield glass 11. The panel side decorative portion 21b is a lip-shaped member which is in contact with the outer surface of the body panels 12 and 13. A groove with a U-shaped cross section is formed between the glass side decorative portion 21a and said support portion 24 to accept the windshield glass 11.

Each portion of the windshield molding 2 has basically the same cross-sectional shape along the entire periphery. The glass side decorative portion 21a is enlarged at the side section continuously in each of the width and thickness directions. In other words, on the cross section perpendicular to the longitudinal direction of the windshield molding 2, each of the support leg 22, support portion 24, elastic lip 25, and panel side decorative portion 21b is maintained to an approximately uniform shape throughout the entire length of the windshield molding 2. This is because the height difference between the outer surface of the windshield glass 11 and those of the body panels 12 and 13 is maintained uniformly throughout the entire length of the windshield molding 2. On the other hand, the glass side decorative portion 21a has variations in width and thickness from the corner molding section 2B to side molding section 2C. The width in the direction perpendicular to the longitudinal direction is increased toward the inner periphery. The thickness in the direction from the inside to the outside (vertical direction in drawings) is enlarged toward the outside. The structure of the glass side decorative portion 21a is described below.

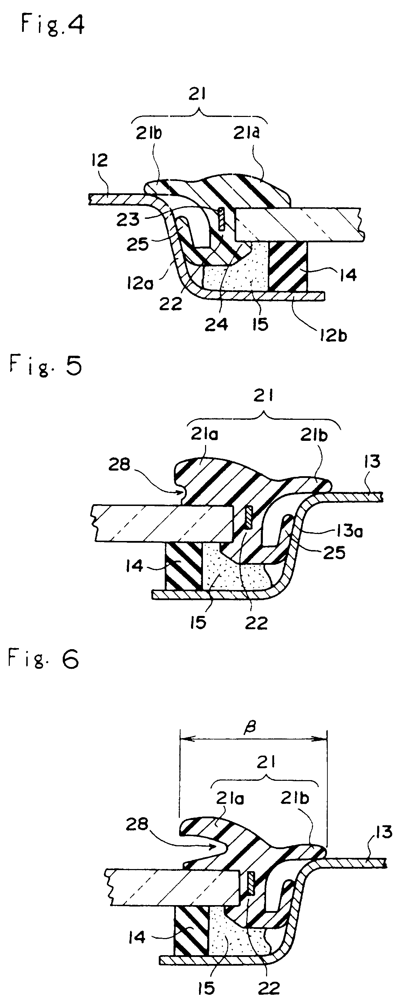

As shown in Fig. 3, the glass side decorative portion 21a at the upper molding section 2A is maintained in uniform cross-sectional shape in the longitudinal direction and fitted on the outer surface of the upper edge of the windshield glass 11. On the other hand, the glass side decorative portion 21a from the corner molding section 2B to the side molding section 2C is gradually extended toward the inner periphery and is gradually enlarged toward the outside. At the corner molding section 2B shown in Fig. 4, the glass side decorative portion 21a is extended to the inner periphery (left side in Fig. 4) and is slightly enlarged in thickness in the vertical direction, as compared with the upper molding section 2A. As shown in Fig. 5, the glass side decorative portion 21a at the upper side of the side molding section 2C is substantially enlarged to the outside while extending slightly toward the inner periphery. At the section near the center of the side molding section 2C shown in Fig. 6, the amounts of extension to the inner periphery and of enlargement to the outside, that is, the width and thickness of the glass side decorative portion 21a are at the maximum. The maximum width and thickness of said glass side decorative portion 21a are maintained constant along the lower side of the side section. Supposing that the width of the molding at the section near the center of the side molding section 2C shown in Fig. 6 to be and the width of the molding at the upper molding section 2A shown in Fig. 3 to be , and are in the relationship > . The thick section of this glass side decorative portion 21a that is enlarged to the inner periphery and the outside is formed so that the outer surface is a twisted one. In other words, the glass side decorative portion 21a is enlarged to the outside so as to rotate with a specified line segment as the diameter, the outer surface of the glass side decorative portion 21a forming a twisted surface with said continuous rotation line segment.

The inner periphery wall of the enlarged thick section of said glass side decorative portion 21a is made in an arc-shaped curved face. The center axis of this arc-shaped curved face is set to a constant axis extending in the longitudinal direction of the windshield molding 2. Said center axis is positioned directly above the boundary between the glass side decorative portion 21a and panel side decorative portion 21b.

Rainwater groove 28 is provided on the arc-shaped inner periphery wall of said glass side decorative portion 21a so as to open to the inner periphery (left side in drawings). Rainwater groove 28 is made in an approximately triangular crosssectional shape and is provided corresponding to the thickness of said enlarged thick section. In other words, the depth and width of the rainwater groove 28 are changed in proportion to the enlarged amount of the glass side decorative portion 21a. Said rainwater groove 28 appears from the section (see Fig. 5) near the corner of the side molding section 2C. The cross-sectional area of the rainwater groove is maximum at the approximate center section (see Fig. 6) of the side molding section 2C in the longitudinal direction. A constant cross-sectional shape is maintained from here to the lower area.

The wall at the lower side which forms said rainwater groove 28 is formed on the glass protector 29 contacting the windshield glass (11).

When installing this windshield molding 2, the windshield molding 2 is installed along the periphery of the windshield glass 11. At this time, a U-shaped groove between the support portion 24 of the upper molding section 2A and the glass side decorative section 21a is inserted from the upper periphery section to the corner periphery section of the windshield glass 11. At the same time, a U-shaped groove between the support portion 24 of the side molding section 2C and the glass side decorative portion 21a is fitted over the side periphery section of the windshield glass 11. The corner molding section 2B is curved to the specified bending rate as the windshield molding 2 is installed, but since the glass side decorative portion 21a is enlarged as described above, no wrinkles or other defects will be caused due to the difference in length of the inner and the outer bending circumferences.

On the other hand, a belt-like rubber dam 14 is adhered to the flanges 12b and 13b on the above-mentioned body panels 12 and 13, and adhesive 15 is filled by extrusion around the outer periphery of said rubber dam 14. The inner side of the windshield glass 11 on which the windshield molding 2 is installed is pressed onto the above-mentioned rubber dam. As a result, the support portion 24 of the windshield molding 2 is fixed with the adhesive 15, and the elastic lip 25 is bent in an L shape and fixed to the bent walls 12a and 13a. The elastic rebound force caused by bending the elastic lip 25 works as the fixing force of the windshield molding 2.

The windshield glass 11 is thus fixed on the flanges 12b and 13b on the body panels 12 and 13 at approximately the same height all-round. The windshield molding 2 is installed so as to maintain a constant relationship with respect to the outer surface of the windshield glass 11 and the surfaces of the body panels 12 and 13 throughout the entire length. As described above, the glass side decorative portion 21a is enlarged to the inner periphery and the outside at the side molding section 2C. In other words, the uniformly thin glass side decorative portion 21a is installed in a uniform state throughout the entire length of the upper molding section (see Fig. 3). The glass side decorative portion 21a is gradually enlarged to the inner periphery and the outside from the halfway of the corner molding section to the side molding section (see Figs. 4 and 5). The enlarged amount of said glass side decorative portion 21a is increased to the maximum toward the center area of the side molding section (see Fig. 6). Toward the lower area of the side molding section, the maximum enlarged state of the glass side decorative portion 21a is maintained constant.

In the case of the said structure for installing the windshield glass 11 on the vehicle body, rainwater falling on the windshield glass 11 is led to the inner peripheral wall of the glass side decorative portion 21a and the rainwater collected in the side molding section is led through the rainwater groove 28 and drained at the specified portion.

Windshield molding 2 installed on the windshield glass 11 may be inserted into the windshield opening, or after inserting the windshield glass 11 into the windshield frame in advance, the windshield molding may be inserted into the space between the periphery of the windshield glass 11 and the body panels 12 and 13.

The following explains the device for forming the above-mentioned windshield molding 2.

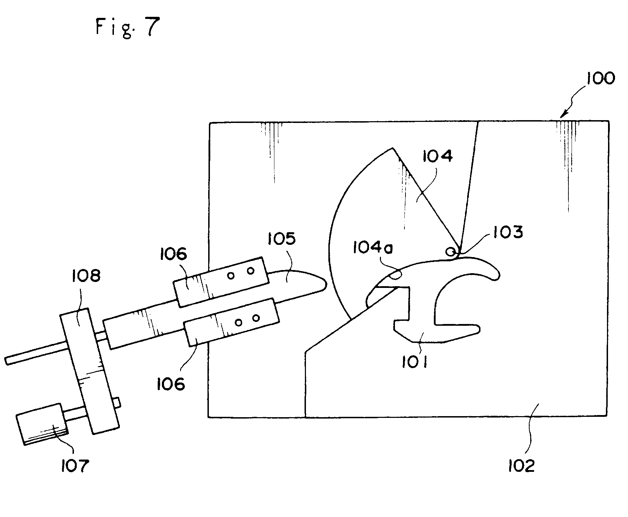

As Figs. 7 to 10 show, the molding forming unit 100 is fitted with three dies having openings for extruding synthetic resin. These dies are first die 102, second die 104, and third die 105 arranged in the molding extruding direction (vertical direction on the paper). The first die 102 is fixed and has an extrusion opening 101 having an opening shape for the entire windshield molding 2. At this time, the section for forming the glass side decorative portion 21a takes the opening shape corresponding to the glass side decorative portion of maximum enlargement without rainwater groove 28, and is formed in an approximate sectorial shape as viewed from the front.

The second die 104 and the third die 105 are made of plate-like members respectively, and are supported in front of the first die 102 so as to be able to move respectively. The second die 104 is formed in an approximate sectorial shape as viewed from the front. The side 104a corresponding to the radius of this sector is formed in an arc shape corresponding to the outside edge (upper edge) of the glass side decorative portion 21a. The plate section having this arc-shaped side 104a partly shields the extrusion opening 101 of the first die 102 in order to form the outer surface of the glass side decorative portion 21a. The center area of the sector-like second die 104 is positioned directly above the boundary between the glass side decorative portion 21a and the panel side decorative portion 21b and is supported with the support pin 103 so as to freely rotate with respect to said first die 102. Therefore, when the second die 104 is rotated with the support pin 103 as its center, the area of the extrusion opening 101 of the first die 102 shielded by the second die 104 is changed so as to change the extrusion opening area for the glass side decorative portion 21a.

When the second die 104 is rotated as described above, the tip of the arc-shaped side 104a draws an arc-shaped locus with the rotation center, support pin 103, as the center. The shape of the extrusion opening 101 provided on said first die 102 is set in accordance with this. More specifically, the edge 101a of the extrusion opening 101 corresponding to the inner periphery wall of the glass side decorative portion 21a is formed in an arc shape with a constant diameter along the arc-shaped locus of said No. 2 die 104, and the locus center for drawing the arc-shaped edge 101a of the extrusion opening 101 on No. 1 die 102 is approximately identical to the rotation center 103 of the second die 102.

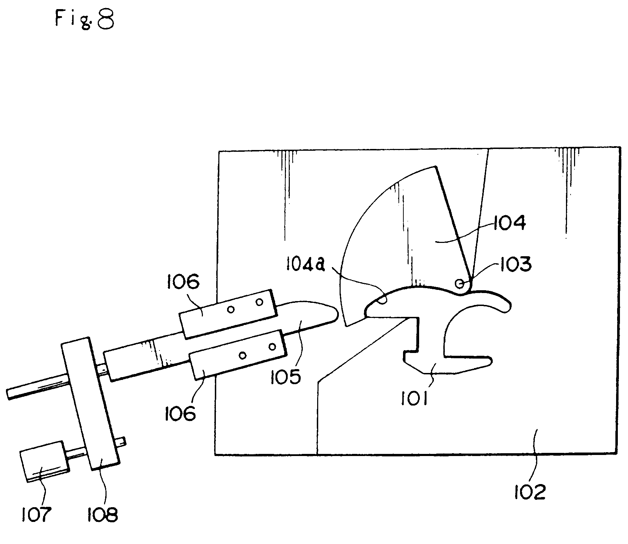

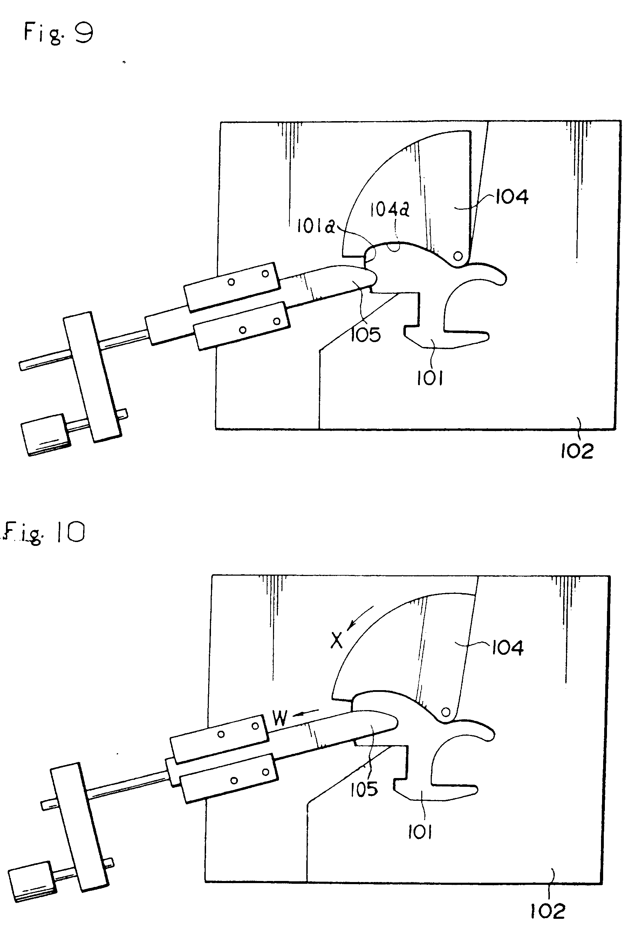

Said third die 105 is supported by a pair of guides 106 so as to allow parallel motion. Connecting rod 109 is provided at the left rear end of the third die 105. This connecting rod 109 is connected to the drive motor 107 through the converter which converts rotary motion to linear motion. With the driving force from the drive motor 107, the third die 105 reciprocates between the upper molding section forming position shown in Fig. 7, the corner molding section forming position shown in Fig. 8, and the side molding section forming position shown in Figs. 9 and 10.

A triangular shielding lug is formed at the right tip of the third die 105 so as to correspond to the rainwater groove 28 of the above-mentioned windshield molding 2. The shielding lug of the third die 105 is positioned so as to enter the extrusion opening for the glass side decorative portion 21a of the extrusion opening 101 of the first die 102. As shown in Figs. 7 to 10, it is designed to reciprocate in parallel interlocked with the rotating and reciprocating motion of the second die 104.

The following explains the production method of the windshield molding 2 with the above-mentioned molding extruder.

To produce the windshield molding 2, the upper molding section 2A, the corner molding section 2B, and the side molding section 2C are extruded as a single molding, said single molding being produced in the order of side molding section 2C, corner molding section 2B, upper molding section 2A, another corner molding 2B, and another side molding section 2C.

When the side molding section 2C is extruded, the second die 104 and the third die 105 are positioned with respect to the first die 102, as shown in Fig. 10, so that the extrusion opening 101 of the first die 102 is maintained at the maximum opening area. A band-like thin metal plate core is fed to the extrusion opening 101 of the first die 102, at the position corresponding to the support leg 92. Extrusion starts from the lower end (the right end portion in Fig. 3) of the side molding section to extrude the side molding section 2C having the cross-sectional shape shown in Fig. 6. At this time, the glass side decorative portion 21a is obtained with the cross-sectional shape of the maximum enlarged sector. Rainwater groove 28 also has the maximum triangular cross-sectional area.

After the side molding section 2C is extruded to a certain length in a certain sectional form, the second die 104 starts rotating so as to descend in the X direction in Fig. 9. With this motion, the shielded amount of the extrusion opening 101 of the first die 102 corresponding to the glass side decorative portion 21a gradually increases so that the thickness of the enlarged thick section of the glass side decorative section 21a gradually decreases. The third die 105 retracts in the W direction in Fig. 10 in proportion to the decrease in the enlarged thick section of this glass side decorative portion 21a, so that the cross-sectional area of rainwater groove 28 formed on the glass side decorative portion 21a gradually decreases. At this time, the third die 105 is moved in synchronism with the motion speed of the second die 104 in order to obtain the rainwater groove 28 whose cross-sectional area is proportional to the thickness of the enlarged thick section of the glass side decorative portion 21a.

When the forming position for the corner molding section 2B is neared, and the third die 105 is about to leave the extrusion opening 101 of the first die 102, as shown in Fig. 9, the rainwater groove 28 starts to peter out in the enlarged thick section of the glass side decorative portion 21a, as shown in Fig. 5. At the forming position for the corner molding section 2B, the second die 104 and the third die 105 are set at the positions with respect to the first die 102, as shown in Fig. 8, so that the third die 105 completely leaves the extrusion opening 101 of the first die 102 and the opening area of the extrusion opening 101 of the first die 102 is decreased. When the extrusion of the corner molding section 2B is complete, the second die 104 halts at the final decrease position, as shown in Fig. 7. Then, the extrusion opening 101 takes the shape for the cross-sectional shape of the upper molding section 2A. From this time on, the upper molding section 2A is extruded with a certain cross- sectional shape to a certain length.

When the upper molding section 2A is extruded to a certain length, the other corner molding section 2B and the other side molding section 2C are molded in the procedure opposite to the one described above. Thus, the windshield molding 2 is obtained in one piece. It should be noted that if the shielding lug of the third die 105 is of a sharp shape, a rainwater groove may be provided on a relatively thin corner molding section.

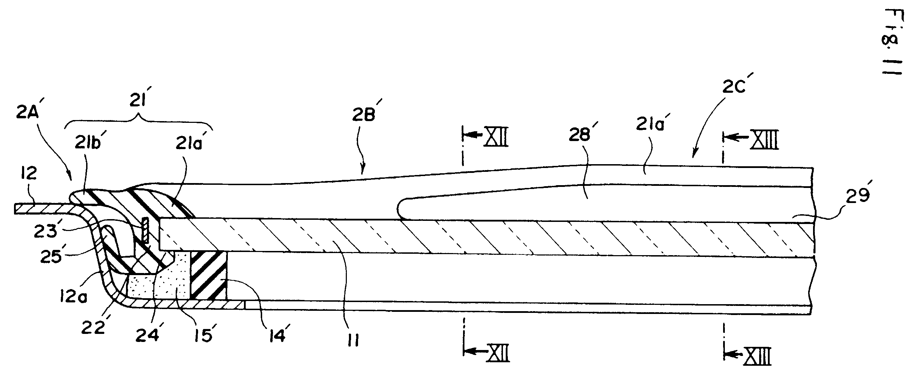

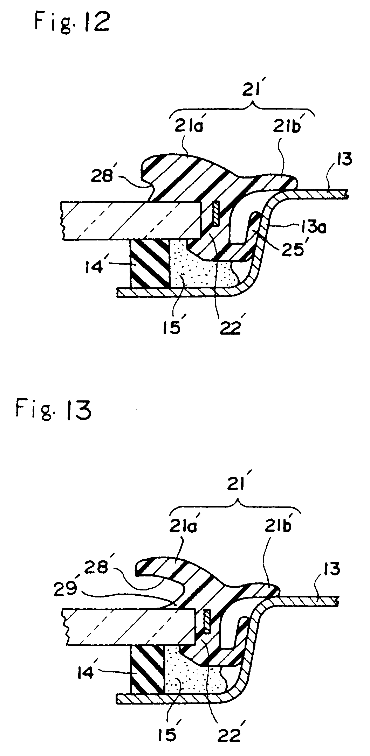

The second embodiment shown in Figs. 11 to 13 has basically the same configuration as the molding 2 of the first embodiment. The members in the figures corresponding to those of the first embodiment are denoted by the same numbers followed by "'". The windshield molding 2' of the second embodiment has a rainwater groove with an increased cross-sectional area compared with that of the windshield molding 2 of the first embodiment. The wall of the glass protector 29' which forms the lower side wall of the rainwater groove 28' is slightly thinner than that in the first embodiment described earlier and is narrower than the width of the glass side decorative portion 21a'. The glass contact width of the glass protector 29' on the side molding section 2C' is formed approximately the same as the glass contact width of the glass side decorative portion 21a' on the upper molding section 2A' shown in Fig. 11.

If the rainwater groove 28' is enlarged to increase the capacity as in the second embodiment, the damming and guiding functions of the rainwater groove 28 can be improved, allowing a more favorable molding to be obtained.

In the second embodiment also, the windshield molding 2' installed on the windshield glass 11 may be inserted into the windshield opening, or the windshield glass 11 inserted into the windshield frame in advance and the windshield molding 2' may be inserted into the space between the periphery of the windshield glass 11 and the body panels 12' and 13'.

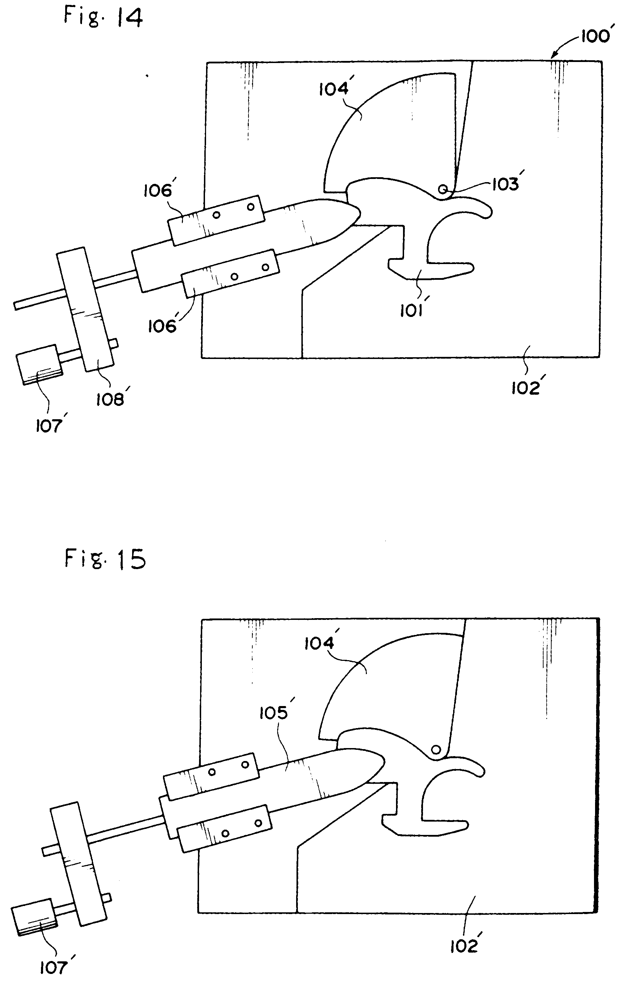

The unit for forming the windshield molding 2' shown in Figs. 14 and 15 has basically the same configuration as the unit 100 for forming the molding 2 described earlier. The members in the figures corresponding to those of the unit 100 are denoted by the same numbers followed by "'". The forming unit 100' of the second embodiment has No. 3 die 105' which is formed slightly wider than No. 3 die 105 of the first embodiment. A rainwater groove 28' having a larger opening area as described above is formed because the wider No. 3 die 105' shields a larger area of the extrusion opening 101' of No. 1 die 102' than in the first embodiment. At the same time, the width of the glass protector 29' is decreased.

The method of forming the windshield molding 2' using this molding forming unit 100' is the same as in the first embodiment, thus explanation thereof is omitted here.

The present invention is applicable not only to the windshield glass as in each embodiment described above but also to rear window glass and other window glass in the same way.

### Industrial Applicability

The present invention is applicable to all types of windshield moldings for automobiles with rainwater grooves and is suitable to produce the whole windshield molding as a single molding without requiring additional cutting or other processes.

## Claims

1. A windshield moulding for a vehicle which is installed along the periphery of windshield glass (11) mounted in a windshield frame opening of the body panels (12, 13) of the vehicle, the moulding comprising:
a support leg (22) for insertion into the space between the periphery of said windshield glass (11) and the inner edge of the windshield frame opening of the body panels (12, 13); and
a decorative portion (21), provided on the outside edge of the support leg (22), to cover said space from the outside of the vehicle; wherein
the decorative portion (21) has a thick section (21a) at the section (2C) corresponding to the side edge of the windshield glass (11), whereby the width of the decorative portion (21) is gradually enlarged toward the inner periphery of the windshield glass (11) and the outside in the direction perpendicular to the longitudinal direction of the moulding; a rainwater groove (28) is provided on the inner periphery wall of the enlarged thick section (21a) of the decorative portion (21) so as to open to the inner periphery, the rainwater groove depth reducing to zero at a section (2B) corresponding to the upper edge of the windshield glass (11);
whereby the moulding (2) is produced continuously and in one piece by extrusion moulding throughout its entire length, characterised in that:
both the width and the thickness of the decorative portion (21) in the direction from the inside to the outside vary and are extended to a greater degree at the section (2C) corresponding to the side edge than at the section (2A) corresponding to the upper edge of the windshield glass (11); and
the section (2B) in which the depth of the rainwater groove (28) reduces to zero has a variable width and thickness.

2. The windshield moulding for vehicles of claim 1,
wherein the decorative section includes a glass protector (29') which contacts the surface of the windshield glass (11) and forms the wall of the rainwater groove (28') is reduced to a lesser extent than the width of the decorative portion (21a').

3. A method of manufacturing a windshield moulding according to claim 1 or claim 2 by extrusion moulding using a die (100) having an extrusion moulding opening (101) for moulding a decorative portion (21) which covers the space between the periphery of a vehicle windshield glass (11) and the inner edge of a vehicle windshield frame opening in the body panels (12, 13) of a vehicle from the outside of the vehicle;
wherein extrusion moulding is performed using a first die (102) having an extrusion moulding opening with the opening shape for forming the outer surface shape of said decorative portion (21), a second die (104) installed so as to move diagonally relative to said first die (102) so that the opening area of the extrusion moulding opening (101) for the decorative portion (21a) may be changed by partly shielding the extrusion moulding opening (101) of the first die (102) for the decorative portion (21a), and
a third die installed so as to move relative to said first die (102) so that it may enter the extrusion moulding opening (101) of said first die (102) for the decorative portion (21a) from the side to partly shield the extrusion moulding opening (101) and change the shielded area, the method comprising the steps of:
extruding the section (2C) corresponding to the side edge of the windshield glass (11), enlarging the decorative portion (21a) toward the outside and the inner periphery by diagonally moving said second die (104) so that the opening area of the extrusion moulding opening (101) of said first die (102) for the decorative portion (21a) is increased;
extruding the rainwater groove (28) on the side wall of an enlarged thick section of the decorative portion (21a), allowing said third die (105) to enter the increased opening area region of the extrusion opening (101) for said decorative portion (21a) at a specified timing;
extruding the section (2A) corresponding to the upper edge of the windshield glass (11) and the section (2B) joining the upper (2A) and side (2C) sections by reducing the width of the decorative portion (21a) to a volume narrower than the section (2C) corresponding to the side edge of said windshield glass by further diagonally moving said second die (104) so that the opening area of the extrusion opening (101) of said first die (102) for the decorative portion (21a) is reduced toward the inside and the outer periphery to provide thereby a decorative portion of varying width and thickness;
wherein the moulding (2) is extruded continuously and in one piece from the extrusion opening of the die (100).

## Patentansprüche

1. Eine Windschutzscheibe-Rahmen(dichtungs)leiste für ein Fahrzeug, die längs der Peripherie eines in eine Windschutzscheiben-Rahmenöffnung der Karosseriebleche 12, 13 des Fahrzeuges montierten Windschutzscheibenglases 11 angeordnet ist, wobei die Rahmenleiste umfaßt:
Einen Stützschenkel (22) zum Einsetzen in den Spalt zwischen dem Außenrand des Windschutzscheibenglases (11) und dem inneren Rand der Windschutzscheiben-Rahmenöffnung der Karosseriebleche (12, 13), und
einen dekorativen Teil (21), der an dem äußeren Rand des Stützschenkels (22) vorgesehen ist, um den Spalt von der Außenseite des Fahrzeuges her abzudecken, wobei
der dekorative Teil (21) einen starken Abschnitt (21a) in dem Abschnitt (2C) aufweist, der dem Seitenrand des Windschutzscheibenglases (11) entspricht, wobei die Breite des dekorativen Teils (21) zu der inneren Peripherie des Windschutzscheibenglases (11) und nach außen hin in Richtung senkrecht zu der Längsrichtung der Rahmenleiste hin allmählich zunimmt; und wobei eine Regenwasserrinne (28) an der inneren Peripherie des verdickten starken Abschnitts (21a) des dekorativen Teils (21) so vorgesehen ist, daß sie sich zu der inneren Peripherie hin öffnet, wobei die Tiefe der Regenwasserrinne in einem Abschnitt (2B), der dem oberen Rand des Windschutzscheibenglases (11) entspricht, gegen null abnimmt;
wobei die Rahmenleiste (2) durch Strangpressen fortlaufend und in einem Stück in vollständiger Länge hergestellt wird, dadurch gekennzeichenet, daß
sowohl die Breite als auch die Stärke des dekorativen Teils (21) in Richtung von der Innenseite zur Außenseite variieren und sich in dem Abschnitt (2C), der dem Seitenrand entspricht, in einem höheren Maß erweitern als in dem Abschnitt (2A), der dem oberen Rand des Windschutzscheibenglases (11) entspricht, und
daß der Bereich (2B), in dem die Tiefe der Regenwasserrinne (28) gegen null geht, eine variable Breite und Stärke hat.

2. Die Windschutzscheibe-Rahmen(dichtungs)leiste für Fahrzeuge nach Anspruch 1, bei der der dekorative Teil einen Glasschutz (29') umfaßt, der die Oberfläche des Windschutzscheibenglases (11) berührt und die Wandung der Regenwasserrinne (28') bildet, die in einem geringeren Maß reduziert ist als die Breite des dekorativen Teils (21a').

3. Ein Verfahren zur Herstellung einer Windschutzscheibe-Rahmen(dichtungs)leiste nach Anspruch 1 oder 2 durch Strangpressen unter Verwendung einer Düse (100) mit einer Strangpreßöffnung (101) zur Formung eines dekorativen Teils (21), der den Spalt zwischen der Peripherie des Fahrzeug-Windschutzscheibe-Glases (11) und den inneren Rand der Fahrzeug-Windschutzscheiben-Rahmenöffnung in den Karosserieblechen (12, 13) eines Fahrzeuges von der Außenseite des Fahrzeuges her abdeckt;
worin das Strangpressen unter Verwendung einer ersten Düse (102) durchgeführt wird, die eine Strangpreßöffnung mit einem Öffnungsprofil zur Formung der äußeren Oberflächengestalt des dekorativen Teils (21) aufweist,
eine zweite Düse (104) so angeordnet ist, daß sie relativ zu der ersten Düse (102) diagonal bewegbar ist, so daß der Öffnungsbereich der Strangpreßöffnung (101) für den dekorativen Teil (21a) durch teilweises Abschirmen der Strangpreßöffnung (101) der ersten Düse (102) für den dekorativen Teil (21a) verändert werden kann, und
eine dritte Düse so angeordnet ist, daß sie relativ zu der ersten Düse (102) bewegbar ist, so daß sie von der Seite her in die Strangpreßöffnung (101) der ersten Düse (102) für den dekorativen Teil (21a) eintreten kann, um die Strangpreßöffnung (101) teilweise abzuschirmen und den abgeschirmten Bereich zu verändern, wobei das Verfahren die Verfahrensschritte umfaßt:
Strangpressen des Abschnitts (2C), der dem Seitenrand des Windschutzscheibenglases (11) entspricht;
Verbreitern des dekorativen Teils (21a) nach außen und zu der inneren Peripherie hin durch diagonales Bewegen der zweiten Düse (104), so daß der Öffnungsbereich der Strangpreßöffnung (101) der ersten Düse (102) für den dekorativen Teil (21a) wächst;
Strangpressen der Regenwasserrinne (28) an der Seitenwandung eines vergrößerten starken Abschnitts des dekorativen Teils (21a), was der dritten Düse (105) erlaubt, in den vergrößerten Öffnungsbereich der Strangpreßöffnung (101) für den dekorativen Teil (21a) zu einem bestimmten Zeitpunkt einzutreten;
Strangpressen des dem oberen Rand des Windschutzscheibenglases (11) entsprechenden Abschnitts (2A) und des Abschnitts (2B), der die oberen (2A) und seitlichen (2C) Abschnitte unter Reduzierung der Breite des dekorativen Teils (21a) auf ein Maß, das schmaler ist als der Abschnitt (2C), der dem Seitenrand des Windschutzscheibenglases entspricht, durch weiteres diagonales Bewegen der zweiten Düse (104) so, daß der Öffnungsbereich der Strangpreßöffnung (101) der ersten Düse (102) für den dekorativen Teil (21a) zu der Innenseite und der äußeren Peripherie hin verringert wird, um dadurch einen dekorativen Teil veränderlicher Breite und Dicke zu erzielen;
wobei die Rahmenleiste (2) fortlaufend und in einem Stück aus der Strangpreßöffnung der Düse (100) extrudiert wird.

## Revendications

1. Une moulure de pare-brise pour un véhicule, installée le long de la périphérie d'une vitre de parebrise (11) montée dans l'ouverture du cadre de pare-brise des panneaux de la carrosserie (12, 13) du véhicule, la moulure comprenant:
une extension de support (22) pour l'insertion dans un espace entre la périphérie de ladite vitre (11) et le bord intérieur de l'ouverture du cadre de parebrise des panneaux de la carrosserie (12, 13); et
une portion décorative (21), prévue sur le bord extérieur de l'extension de support (22), pour recouvrir ledit espace à partir de l'extérieur du véhicule; dans laquelle
la portion décorative (21) a une section épaisse (21a) dans sa section (2C) correspondant au bord latéral de la vitre (11), la largeur de la portion décorative (21) étant ainsi graduellement augmentée vers la périphérie intérieure de la vitre de pare-brise (11) et vers l'extérieur dans la direction perpendiculaire à la direction longitudinale de la moulure; une rainure pour l'eau de pluie (28) étant prévue sur la paroi de la périphérie intérieure de la section épaisse agrandie (21a) de la portion décorative (21) de façon à s'ouvrir vers la périphérie intérieure, la profondeur de la rainure se réduisant à zéro dans la section (2B) correspondant au bord supérieur de la vitre (11);
la moulure (2) étant ainsi produite en continu et en une seule pièce par moulage par extrusion d'un bout à l'autre de sa longueur totale,
caractérisée en ce que,
tant la largeur que l'épaisseur de la portion décorative (21), dans la direction allant de l'intérieur jusqu'à l'extérieur, varient et sont étendues à un degré plus élevé à la section (2C) correspondant au bord latéral que dans la section (2A) correspondant au bord supérieur de la vitre (11); et en ce que
la section (2B), où la profondeur de la rainure pour l'eau de pluie (28) se réduit à zéro, a une largeur et une épaisseur variables.

2. La moulure de pare-brise pour véhicules de la revendication 1, dans laquelle la section décorative comprend un protecteur de vitre (29'), qui touche la surface de la vitre (11) et forme la paroi de la rainure pour l'eau de pluie (28'), et qui est réduit à une largeur moindre que la largeur de la portion décorative (21a').

3. Un procédé de fabrication d'une moulure de parebrise suivant la revendication 1 ou la revendication 2, par moulage par extrusion en utilisant une filière (100) ayant une ouverture de moulage par extrusion (101) pour former la portion décorative (21) qui recouvre l'espace entre la périphérie d'une vitre de pare-brise de véhicule (11) et le bord intérieur d'une ouverture de cadre de pare-brise de véhicule dans des panneaux de carrosserie (12, 13) d'un véhicule, à partir de l'extérieur du véhicule;
dans lequel le moulage par extrusion est réalisé en utilisant une première filière (102) ayant une ouverture de moulage par extrusion dont la configuration sert à former la surface extérieure de la portion décorative (21), et une deuxième filière (104), montée de façon à se déplacer en diagonale par rapport à ladite première filière (102), de telle sorte que la surface de l'ouverture de moulage par extrusion (101) pour la portion décorative (21a) puisse être modifiée en masquant partiellement l'ouverture de moulage par extrusion (101) de la première filière (102) pour la portion décorative (21a),et également
une troisième filière, montée de façon à se déplacer par rapport à la première filière (102), de telle sorte qu'elle puisse pénétrer latéralement dans l'ouverture de moulage par extrusion (101) de ladite première filière (102) pour la portion décorative (21a) pour masquer partiellement l'ouverture de moulage par extrusion (101) et modifier la surface masquée, ce procédé comprenant les étapes suivantes:
extrusion de la section (2C) correspondant au bord latéral de la vitre (11), agrandissement de la portion décorative (21a) vers la périphérie extérieure et intérieure en déplaçant en diagonale la deuxième filière (104), de telle sorte que la surface de l'ouverture de moulage par extrusion (101) de la première filière (102) pour la portion décorative (21a) soit accrue;
extrusion de la rainure pour l'eau de pluie (28) sur la paroi latérale d'une section épaisse augmentée de la portion décorative (21a), permettant à la troisième filière (105) de pénétrer dans la surface d'ouverture accrue de l'ouverture d'extrusion (101) pour ladite portion décorative (21a) à un rythme spécifié;
extrusion de la section (2A), correspondant au bord supérieur de la vitre (11) et de la section (2B), joignant les sections supérieure (2A) et latérale (2C), en réduisant la largeur de la portion décorative (21a) présentant un volume plus étroit que la section (2C) correspondant au bord latéral de la vitre en déplaçant davantage en diagonale la deuxième filière (104), de telle sorte que la surface de l'ouverture d'extrusion (101) de la première filière (102) pour la portion décorative (21a) soit réduite à sa périphérie intérieure et extérieure pour fournir de ce fait une portion décorative de largeur et d'épaisseur variables;
et dans lequel la moulure (2) est extrudée en continu et en une seule pièce à partir de l'ouverture d'extrusion de la filière (100).
